# EUROPEAN PATENT APPLICATION

(11) **EP 3 241 977 A1**
(43) Date of publication of application: **08.11.2017**
(21) Application number: 17169446.6
(22) Date of filing: 04.05.2017
(51) Int. Cl.: E21B 19/16

(54) **USE OF ACOUSTIC EMISSION TECHNOLOGY IN OILFIELD TUBULAR MAKE UPS**

(30) Priority: 06.05.2016 US 201662332627 P
(71) Applicant: Baker Hughes Incorporated, Houston, TX 77210-4740 (US)
(72) Inventor: ROSE, David, Aberdeenshire (US)
(74) Representative: Mabey, Katherine Frances

(57) **Abstract**

A threaded connection make up monitoring system includes an acoustic emission transducer operatively connected to one positioned to capture an acoustic signature associated with forming the threaded connection between a first member and a second member. A controller is operatively coupled to the acoustic emission transducer. The controller is operable to receive a signal from the acoustic emission transducer embodying the acoustic signature. The controller is operable to output a signal indicating whether the acoustic signature represents a properly made up threaded connection of the first member and the second member or whether the acoustic signature represents an improperly made up threaded connection of the first member and the second member.

## Description

### CROSS REFERENCE TO RELATED APPLICATIONS

This application claims the benefit of U.S. Application No. 62/332627, filed on May 6, 2016, which is incorporated herein by reference in its entirety.

### BACKGROUND

Downhole operations often include a downhole string that extends from an uphole system into a formation. The uphole system may include a support structure, pumps, and other systems that support resource exploration, development, and extraction. Generally, the downhole string is constructed by joining together multiple tubulars. During formation or made up connection of the downhole string, a first tubular is installed through a fixture in the support structure and moved to a desired position. The first tubular includes a box end. A second tubular includes a pin end that may be aligned with the box end of the first tubular and then threaded therein.

A tong system having a backup tong and a power tong moves into position. The backup tong grips the first tubular and the power tong grips the second tubular. The backup tong prevents rotation of the first tubular as the power tong rotates the second tubular to connect the pin end with the box end forming a made up connection. The tong system may include one or more sensors to determine whether a properly made up connection is formed between the first and second tubulars. Sensors include torque sensors, rotary encoders, and temperature sensors. An improper made up connection could require removal and replacement of the casing and or tubing resulting in a tremendous cost.

### SUMMARY

A threaded connection make up monitoring system includes an acoustic emission transducer operatively connected to one positioned to capture an acoustic signature associated with forming a threaded connection between a first member and a second member. A controller is operatively coupled to the acoustic emission transducer. The controller is operable to receive a signal from the acoustic emission transducer embodying the acoustic signature. The controller is operable to output a signal indicating whether the acoustic signature represents a properly made up threaded connection of the first member and the second member or whether the acoustic signature represents an improperly made up threaded connection of the first member and the second member.

A power tong assembly for making up connections of tubulars includes a backup tong operable to extend about and fixedly clamp a first tubular. A power tong spaced from the backup tong. The power tong includes a rotary drive system operable to retain and rotate a second tubular relative to the first tubular forming a made up threaded connection. A make up monitoring system is operatively connected to at least one of the backup tong and the power tong. The make up monitoring system includes an acoustic emission transducer positioned to capture an acoustic signature associated with forming the made up threaded connection between the first tubular and the second tubular. A controller operatively coupled to the acoustic emission transducer. The controller is operable to receive a signal from the acoustic emission transducer embodying the acoustic signature. The controller is operable to output a signal indicating whether the acoustic signature represents a properly made up threaded connection of the first tubular and the second tubular or whether the acoustic signature represents an improperly made up threaded connection of the first tubular and the second tubular.

A resource exploration system includes a downhole portion having a downhole string having one or more tubulars extending into a formation, an uphole portion including a support structure, and a power tong assembly supported relative to the support structure. The power tong assembly includes a backup tong operable to extend about and fixedly clamp an uppermost one of the one or more tubulars. A power tong spaced from the backup tong. The power tong includes a rotary drive system operable to retain and rotate a non-deployed tubular relative to the uppermost one of the one or more tubulars. A make up monitoring system is operatively connected to at least one of the backup tong and the power tong. The make up monitoring system includes an acoustic emission transducer operatively connected to one of the backup tong and the power tong. The acoustic emission transducer is operable to capture an acoustic signature associated with joining the non-deployed tubular and the uppermost one of the one or more tubulars to form a threaded connection. A controller is operatively coupled to the acoustic emission transducer. The controller is operable to receive a signal from the acoustic emission transducer embodying the acoustic signature. The controller is operable to output a signal indicating whether the acoustic signature represents a properly made up threaded connection of the non-deployed tubular and the uppermost one of the one or more tubulars or whether the acoustic signature represents an improperly made up threaded connection of the non-deployed tubular and the uppermost one of the one or more tubulars.

A method of monitoring make up between two members includes aligning a first member having a thread with a second member having a mating thread, clamping the first member, gripping the second member, rotating the second member relative to the first member, coupling the thread with the mating thread through a threading portion to a shouldering point to form a threaded connection, capturing an acoustic signature during at least one of the threading portion and the shouldering point, determining whether the acoustic signature represents a first type indicating a properly made up connection of the second member and the first member or whether the acoustic signature represents a second type indicating an improperly made up connection of the second member and the first member, and providing an output signal indicating whether the acoustic signature is one of the first type and the second type.

### BRIEF DESCRIPTION OF THE DRAWINGS

Referring now to the drawings wherein like elements are numbered alike in the several Figures:
FIG. 1 depicts a resource exploration system including a downhole portion and an uphole portion having a power tong assembly, in accordance with an exemplary embodiment;
FIG. 2 depicts a power tong assembly, in accordance with an aspect of an exemplary embodiment, arranged at the uphole portion of FIG. 1;
FIG. 3 depicts a block diagram illustrating a make-up monitoring system, in accordance with an aspect of an exemplary embodiment;
FIG. 4 depicts a graph illustrating a first acoustic signature representing a properly made up connection between two tubulars;
FIG. 5 depicts a graph illustrating a second acoustic signature representing an improperly made up connection between two tubulars; and
FIG. 6 depicts a flow chart describing a method of monitoring make up of a threaded connection between two tubulars for a downhole string, in accordance with an aspect of an exemplary embodiment.

### DETAILED DESCRIPTION

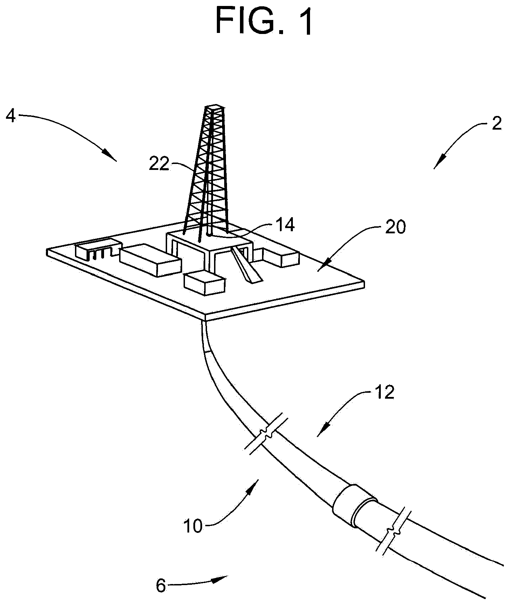

A resource exploration system, in accordance with an exemplary embodiment, is indicated generally at 2 in FIG. 1. Resource exploration system 2 includes an uphole portion 4 and a downhole portion 6. Downhole portion 10 includes a downhole string 10 formed of a plurality of downhole tubulars 12. One or more tubulars (not separately labeled) project into uphole portion 4 with tubular 12 representing an uppermost tubular 14 of the plurality of downhole tubulars 12. Downhole string 10 is formed by joining each of the plurality of downhole tubulars 12 to one another through threaded connections that include a thread and a mating thread such as a pin/box connection, threaded collars, etc.(not separately labeled). Uppermost tubular 14 commonly includes a box end 16 that forms one portion of the made up threaded connection with a pin end or a following tubular (discussed below).

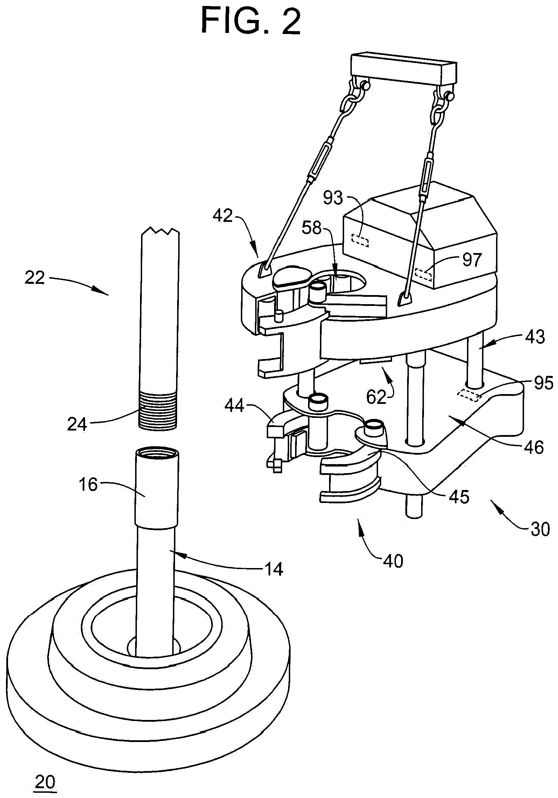

Uphole portion 4 includes a support structure 20 which may support a plurality of non-deployed tubulars, one of which is indicated at 22. Of course, it should be understood that depending upon circumstances, the plurality of non-deployed tubulars may reside adjacent to support structure 20. Non-deployed tubular 22 includes a pin end 24 that forms a second portion of the threaded connection. As shown in FIG. 2, support structure 20 also supports a tubular joining system, which, as will be discussed more fully below, selectively connects non-deployed tubulars, one at a time, to the uppermost tubular of a plurality of downhole tubulars 12 to form downhole string 10. In accordance with an aspect of an exemplary embodiment the tubular joining system may take the form of a power tong assembly 30 may be a manually operated system such as shown in FIG. 2, or a fully automated system controlled by a remote operator. Of course, other tubular joining systems, such as casing running tools (CRTs) (not shown) may be employed to join tubulars and that make up monitoring system 62 may be associated with CRTs.

In accordance with an aspect of an exemplary embodiment, power tong assembly 30 includes a backup tong 40 mechanically linked to a power tong 42 through one or more support members, one of which is indicated at 43. Backup tong 40 includes clamping portion (not separately labeled) having a first gripping element 44 and a second gripping element 45 connected through a housing portion 46. Housing portion 46 may include various mechanisms (not shown) that are selectively operated to bring first and second gripping elements 44 and 45 together to grasp uppermost tubular 14. First and second gripping elements 44 and 45 may be subsequently opened to release uppermost tubular 14 after, for example, forming the made up connection.

Power tong 42 includes a first gripping member (not separately labeled) and a second gripping member (also not separately labeled) and a rotary drive system 58. First and second gripping members grasp an end (not separately labeled) of one of the plurality of non-deployed tubulars 22 aligned with uppermost tubular 14 causing box end 16 to engage with pin end 24. Rotary drive system 58 rotates the one of the plurality of non-deployed tubulars 22 threading pin end 24 into box end 16 to form the threaded connection. After forming the threaded connection, downhole string 10 is advanced downhole and the one of the plurality of non-deployed tubulars 22 becomes the uppermost tubular of the plurality of downhole tubulars 12.

In further accordance with an exemplary aspect, power tong assembly 30 includes a threaded connection make up monitoring system 62 that operates to monitor a make up process and determine whether a threaded connection has been made up properly, or whether an issue occurred during formation of the threaded connection that results in a poor seal or a poor structural connection. Catching any problems of this sort at support structure 20 saves time, resources and reduces any potential negative environmental impacts that could result from leaks in downhole string 10. For example, once downhole string 10 is formed, a pressure test is typically conducted. If the pressure test indicates a leak, downhole string 10 is removed, tubular by tubular until reaching the improperly made up connection. The improperly made up connection is repaired and downhole string 10 is reassembled. The cost of repairing a downhole string is high and would detract from an overall profitability of resource exploration system 2.

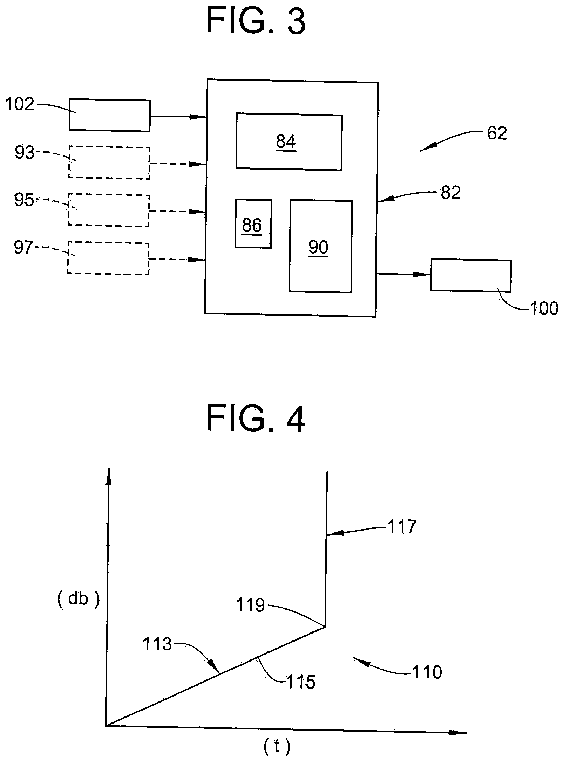

As seen in FIG. 3, make up monitoring system 62 may include a controller 82 having a central processing unit or CPU 84 operatively associated with a non-volatile memory 86 and a make up monitoring controller 90. Make up monitoring system 62 may be operatively coupled to a rotary encoder 93 mounted to power tong 42 and operable to determine a number of rotations of the one of the plurality of non-deployed tubulars 22 while forming the threaded connection. More specifically, rotary drive system 58 may be operatively coupled to a rotary encoder 93 which may take the form of a turns encoder. Make up monitoring system 62 may also include a load transducer 95 coupled to, for example, housing 46 of backup tong 40. Load transducer 95 may be operable to sense torque levels associated with forming the threaded connection. Make up monitoring system may also be operatively connected to a temperature transducer 97 that monitors temperatures associated with forming the threaded connection.

At this point, it should be understood that rotary encoder 93, load transducer 95 and temperature transducer 97 are optional accessories for the make up monitoring system 62 and may exist in any number of combinations or may not be present in a particular system. Make up monitoring system 82 also includes an output system 100 that provides an indication whether a threaded connection is a proper connection or an improper connection as will be detailed more fully below. Output system 100 may also send a signal to a valve (not shown) that may interrupt a supply of hydraulic fluid or other motive force to power tong 42 stopping rotary drive system 58 and the make up process once a predetermined torque has been achieved.

In still further accordance with an exemplary aspect, make up monitoring system 62 is operatively coupled to an acoustic emission transducer 102 mounted at power tong assembly 30. Acoustic emission transducer 102 may take the form of a piezoelectric sensor, an electromagnetic acoustic transducer (EMAT) or other acoustic emission capturing device, and may be mounted between backup tong 40 and power tong 42. Alternatively the acoustic transmission capturing device may be mounted anywhere that facilitates the capture of acoustic transmissions from the threaded connection during make up. For example, acoustic emission transducer 102 may be mounted to an upper surface (not separately labeled) of backup tong 40, a lower surface (also not separately labeled) of power tong 42 or to one of one or more support members 43. Of course, as noted, it should be understood that the particular mounting location of acoustic emission sensor 102 may vary.

In accordance with an exemplary embodiment, acoustic emission transducer 102 captures acoustic signatures, such as shown at 110 in FIG. 4, associated with forming a threaded connection. Acoustic signatures may include audible acoustic emissions and/or inaudible acoustic emissions such as elastic waves emanating from the made up threaded connection during the make up process resulting from plastic deformations and/or elastic deformations. Acoustic signature 110 represents a proper threaded connection and includes a first portion 113 defined by a threading portion 115 showing a smoothly increasing dB level as pin end 24 is being threaded into box end 16 and a second portion 117, again smooth but as a significantly greater slope, defining a shouldering point 119. Shouldering point 119 represents a metal-to-metal joint being formed between pin end 24 and box end 16.

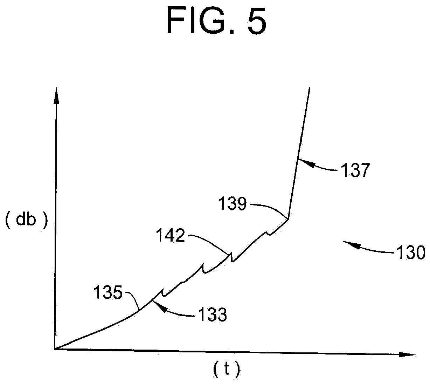

FIG. 5 depicts an acoustic signature 130 representing an improperly made up connection. Acoustic signature 130 includes a first portion 133 defined by a threading portion 135 showing a lack of smooth response as pin end 24 is being threaded into box end 16 and a second portion 137 defining a shouldering point 139. As can be seen in FIG. 5, threading portion 135 exhibits inconsistent signal noise and/or irregularities 142 that may represent various issues occurring during connection make up. For example, irregularities 142 may evidence galling, or other failures that could lead to an improper metal-to-metal joint at shouldering point 139. Of course, it should be understood that monitoring controller 90 may compare a captured acoustic signature with a predetermined acceptance level, or may statistically compare an acoustic signature with a series of prior captured signals and issue acceptance/rejection based on a variance relative to the prior captured signals. It should also be understood that acoustic signatures 110 and 130 are exemplary. One of ordinary skill would understand that acoustic signatures may vary.

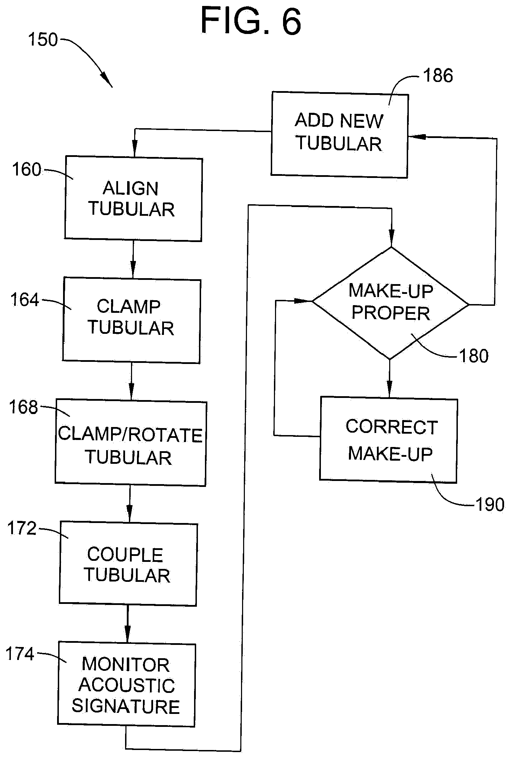

Reference will now follow to FIG. 6 in describing a method 150 of monitoring a threaded connection being made up between two tubulars for a downhole string. In block 160, one of the plurality of non-deployed tubulars 22 is aligned with upper most tubular 14, with pin end 24 engaging box end 16 of tubular 14. In block 164 backup tong 40 clamps uppermost tubular 14. In block 168 power tong 42 clamps the one of the plurality of non-deployed tubulars 22. Power tong 42 rotates the one of the plurality of non-deployed tubulars 22 threading pin end 24 into box end 16 in block 172 to make up a threaded connection.

In block 174, make up monitoring system 62 monitors the formation of the threaded connection including receiving an acoustic signature associated with making up a connection between uppermost tubular 14 and the one of the plurality of non-deployed tubulars 22. Make up monitoring system 62 may also monitor thread turns, load/torque and temperature. A determination is made by make up monitoring controller 90 in block 180 whether the acoustic signature captured in block 174 represents a first type (e.g. FIG. 4), indicating a proper make up; or whether the acoustic signature represents a second type (e.g. FIG. 5), indicating an improper make up by evaluating characteristics of the threading portion and/or the shouldering point. The presence of a proper make up or improper make up may be supported by referencing data from rotary encoder 93, load transducer 95 and/or temperature transducer 97 if so provided.

If the make up is identified as being proper, an output signal is provided through output system 106 and construction of downhole string 10 continues. More specifically, backup tong 40 and power tong 42 are released, a new tubular is added in block 186 and the assembly of downhole string 10 continues at to block 160. If the make up is identified as being improper, an output signal is provided to operators through output system 106 and corrections can be made at support structure 20 in block 190 before the threaded connection is sent downhole. After corrections are made, the threaded connection is rechecked in block 180. The use of acoustic emissions may, on its own, or supplemented by additional inquiry, reduce the likelihood of an improper threaded connection thereby reducing issues associated with a poorly made up threaded connection.

The teachings of the present disclosure may be used in a variety of well operations including production and treatment. In addition to monitoring the make up process, the make up monitoring system may also be employed to monitor and evaluate tightening any other threaded connection such as flange bolts, etc. as desired. Further, the make up monitoring system may be employed in pipe mills and for downhole completions tools preassembled on tubulars in a factory environment.

These operations may involve using one or more treatment agents to treat a formation, the fluids resident in a formation, a wellbore, and/or equipment in the wellbore, such as production tubing. The treatment agents may be in the form of liquids, gases, solids, semi-solids, and mixtures thereof. Illustrative treatment agents include, but are not limited to, fracturing fluids, acids, steam, water, brine, anti-corrosion agents, cement, permeability modifiers, drilling muds, emulsifiers, demulsifiers, tracers, flow improvers etc. Illustrative well operations include, but are not limited to, hydraulic fracturing, stimulation, tracer injection, cleaning, acidizing, steam injection, water flooding, cementing, etc.
Embodiment 1. A threaded connection make up monitoring system comprising: an acoustic emission transducer operatively connected to one positioned to capture an acoustic signature associated with forming a threaded connection between a first member and a second member; and a controller operatively coupled to the acoustic emission transducer, the controller being operable to receive a signal from the acoustic emission transducer embodying the acoustic signature, the controller being operable to output a signal indicating whether the acoustic signature represents a properly made up threaded connection of the first member and the second member or whether the acoustic signature represents an improperly made up threaded connection of the first member and the second member.
Embodiment 2. The threaded connection make up monitoring system according to any prior embodiment, wherein the acoustic emission transducer comprises at least one of a piezoelectric sensor and an electromagnetic acoustic transducer (EMAT).
Embodiment 3. A power tong assembly for making up connections of tubulars comprising: a backup tong operable to extend about and fixedly clamp a first tubular; a power tong spaced from the backup tong, the power tong including a rotary drive system operable to retain and rotate a second tubular relative to the first tubular forming a made up threaded connection; and a make up monitoring system operatively connected to at least one of the backup tong and the power tong, the make up monitoring system comprising: an acoustic emission transducer positioned to capture an acoustic signature associated with forming the made up threaded connection between the first tubular and the second tubular; and a controller operatively coupled to the acoustic emission transducer, the controller being operable to receive a signal from the acoustic emission transducer embodying the acoustic signature, the controller being operable to output a signal indicating whether the acoustic signature represents a properly made up threaded connection of the first tubular and the second tubular or whether the acoustic signature represents an improperly made up threaded connection of the first tubular and the second tubular.
Embodiment 4. The power tong assembly according to any prior embodiment, wherein the acoustic emission transducer is mounted between the backup tong and the power tong.
Embodiment 5. The power tong assembly according to any prior embodiment, further comprising: one or more support members mechanically linking the backup tong and the power tong, the acoustic emission transducer being mounted to one of an upper surface of the backup tong, a lower surface of the power tong and one of the one or more support members.
Embodiment 6. The power tong assembly according to any prior embodiment, wherein the backup tong includes a clamping portion and a housing portion, the acoustic emission transducer being mounted to the housing portion of the backup tong.
Embodiment 7. The power tong assembly according to any prior embodiment, wherein the acoustic emission transducer comprises at least one of a piezoelectric sensor and an electromagnetic acoustic transducer (EMAT).
Embodiment 8. A resource exploration system comprising: a downhole portion including a downhole string having one or more tubulars extending into a formation; and an uphole portion including a support structure and a power tong assembly supported relative to the support structure, the power tong assembly comprising: a backup tong operable to extend about and fixedly clamp an uppermost one of the one or more tubulars; a power tong spaced from the backup tong, the power tong including a rotary drive system operable to retain and rotate a non-deployed tubular relative to the uppermost one of the one or more tubulars; and a make up monitoring system operatively connected to at least one of the backup tong and the power tong, the make up monitoring system comprising: an acoustic emission transducer operatively connected to one of the backup tong and the power tong, the acoustic emission transducer operable to capture an acoustic signature associated with joining the non-deployed tubular and the uppermost one of the one or more tubulars to form a threaded connection; and a controller operatively coupled to the acoustic emission transducer, the controller being operable to receive a signal from the acoustic emission transducer embodying the acoustic signature, the controller being operable to output a signal indicating whether the acoustic signature represents a properly made up threaded connection of the non-deployed tubular and the uppermost one of the one or more tubulars or whether the acoustic signature represents an improperly made up threaded connection of the non-deployed tubular and the uppermost one of the one or more tubulars.
Embodiment 9. The resource exploration system according to any prior embodiment, wherein the acoustic emission transducer is mounted between the backup tong and the power tong.
Embodiment 10. The resource exploration system according to any prior embodiment, further comprising: one or more support members mechanically linking the backup tong and the power tong, the acoustic emission transducer being mounted to one of an upper surface of the backup tong, a lower surface of the power tong and one of the one or more support members.
Embodiment 11. The resource exploration system according to any prior embodiment, wherein the backup tong includes a clamping portion and a housing portion, the acoustic emission transducer being mounted to the housing portion of the backup tong.
Embodiment 12. The resource exploration system according to any prior embodiment, wherein the acoustic emission transducer comprises at least one of a piezoelectric sensor and an electromagnetic acoustic transducer (EMAT).
Embodiment 13. A method of monitoring make up between two members comprising: aligning a first member having a thread with a second member having a mating thread; clamping the first member; gripping the second member; rotating the second member relative to the first member; coupling the thread with the mating thread through a threading portion to a shouldering point to form a threaded connection; capturing an acoustic signature during at least one of the threading portion and the shouldering point; determining whether the acoustic signature represents a first type indicating a properly made up connection of the second member and the first member or whether the acoustic signature represents a second type indicating an improperly made up connection of the second member and the first member; and providing an output signal indicating whether the acoustic signature is one of the first type and the second type.
Embodiment 14. The method of any prior embodiment, wherein aligning the first member and the second member includes aligning a non-deployed tubular having a pin end with a deployed tubular having a box end.
Embodiment 15. The method of any prior embodiment, wherein clamping the second member includes gripping the deployed tubular with a power tong of a power tong assembly.
Embodiment 16. The method of any prior embodiment, wherein gripping the first member includes gripping the non-deployed tubular with a power tong of the power tong assembly.
Embodiment 17. The method of any prior embodiment, wherein rotating the first member includes threading the pin end of the non-deployed tubular into the box end of the deployed tubular with the power tong.
Embodiment 18. The method of any prior embodiment, wherein determining whether the acoustic signature represents the second type includes identifying characteristics of the threading portion of the acoustic signature.
Embodiment 19. The method of any prior embodiment, wherein capturing the acoustic signature during coupling includes receiving signals at one of a piezoelectric sensor and an electromagnetic acoustic transducer (EMAT).
Embodiment 20. The method of any prior embodiment, wherein capturing the acoustic signature includes capturing elastic waves resulting from one of plastic deformations and elastic deformations while coupling the thread with the mating thread.
Embodiment 21. The method of any prior embodiment, wherein determining whether the acoustic signature represents one of the first type indicating and the second type includes referencing data from at least one of a rotary encoder, a load transducer and a temperature transducer.

While one or more embodiments have been shown and described, modifications and substitutions may be made thereto without departing from the spirit and scope of the invention. Accordingly, it is to be understood that the exemplary embodiments have been described by way of illustrations and not limitation.

## Claims

1. A threaded connection make up monitoring system (62) comprising:
an acoustic emission transducer (102) operatively connected to one positioned to capture an acoustic signature (110) associated with forming a threaded connection between a first member and a second member; and
a controller (82) operatively coupled to the acoustic emission transducer (102), the controller (82) being operable to receive a signal from the acoustic emission transducer (102) embodying the acoustic signature (130), the controller (82) being operable to output a signal indicating whether the acoustic signature (130) represents a properly made up threaded connection of the first member and the second member or whether the acoustic signature (130) represents an improperly made up threaded connection of the first member and the second member.

2. The threaded connection make up monitoring system (62) according to claim 1, wherein the acoustic emission transducer (102) comprises at least one of a piezoelectric sensor and an electromagnetic acoustic transducer (EMAT).

3. A power tong assembly (30) for making up connections of tubulars comprising:
a backup tong (40) operable to extend about and fixedly clamp a first tubular;
a power tong (42) spaced from the backup tong (40), the power tong (42) including a rotary drive system (58) operable to retain and rotate a second tubular relative to the first tubular forming a made up threaded connection; and
a make up monitoring system (62) operatively connected to at least one of the backup tong (40) and the power tong (42), the make up monitoring system (62) comprising:
an acoustic emission transducer (102) positioned to capture an acoustic signature (110) associated with forming the made up threaded connection between the first tubular and the second tubular; and
a controller (82) operatively coupled to the acoustic emission transducer (102), the controller (82) being operable to receive a signal from the acoustic emission transducer (102) embodying the acoustic signature (130), the controller (82) being operable to output a signal indicating whether the acoustic signature (130) represents a properly made up threaded connection of the first tubular and the second tubular or whether the acoustic signature (130) represents an improperly made up threaded connection of the first tubular and the second tubular.

4. The power tong assembly (30) according to claim 3, wherein the acoustic emission transducer (102) is mounted between the backup tong (40) and the power tong (42).

5. The power tong assembly (30) according to claim 3 or 4, further comprising: one or more support members (43) mechanically linking the backup tong (40) and the power tong (42), the acoustic emission transducer (102) being mounted to one of an upper surface of the backup tong (40), a lower surface of the power tong (42) and one of the one or more support members (43).

6. The power tong assembly (300 according to any one of claims 3-5, wherein the backup tong (40) includes a clamping portion and a housing portion, the acoustic emission transducer (102) being mounted to the housing portion (46) of the backup tong (40).

7. The power tong assembly (30) according to any one of claims 3-6, wherein the acoustic emission transducer (102) comprises at least one of a piezoelectric sensor and an electromagnetic acoustic transducer (EMAT).

8. A resource exploration system (2) comprising:
a downhole portion (6) including a downhole string (10) having one or more tubulars extending into a formation; and
an uphole portion (4) including a support structure (20) and a power tong assembly (30) supported relative to the support structure, the power tong assembly (30) comprising:
a backup tong (40) operable to extend about and fixedly clamp an uppermost one of the one or more tubulars;
a power tong (42) spaced from the backup tong (40), the power tong including a rotary drive system (58) operable to retain and rotate a non-deployed tubular (22) relative to the uppermost one of the one or more tubulars; and
a make up monitoring system (62) operatively connected to at least one of the backup tong (40) and the power tong (42), the make up monitoring system (62) comprising:
an acoustic emission transducer (102) operatively connected to one of the backup tong (40) and the power tong (42), the acoustic emission transducer (102) operable to capture an acoustic signature (110) associated with joining the non-deployed tubular (22) and the uppermost one of the one or more tubulars to form a threaded connection; and
a controller (82) operatively coupled to the acoustic emission transducer (102), the controller (82) being operable to receive a signal from the acoustic emission transducer (102) embodying the acoustic signature (130), the controller (82) being operable to output a signal indicating whether the acoustic signature (130) represents a properly made up threaded connection of the non-deployed tubular and the uppermost one of the one or more tubulars or whether the acoustic signature (130) represents an improperly made up threaded connection of the non-deployed tubular (22) and the uppermost one of the one or more tubulars.

9. The resource exploration system (2) according to claim 8, wherein the acoustic emission transducer (102) is mounted between the backup tong (40) and the power tong (42).

10. The resource exploration system (2) according to claim 8 or 9, further comprising: one or more support members mechanically linking the backup tong (40) and the power tong (42), the acoustic emission transducer (102) being mounted to one of an upper surface of the backup tong (40), a lower surface of the power tong (42) and one of the one or more support members (43).

11. The resource exploration system (2) according to any one of claims 8-10, wherein the backup tong (40) includes a clamping portion and a housing portion, the acoustic emission transducer (102) being mounted to the housing portion (46) of the backup tong (40).

12. The resource exploration system (2) according to any one of claims 8-11, wherein the acoustic emission transducer (102) comprises at least one of a piezoelectric sensor and an electromagnetic acoustic transducer (EMAT).

13. A method of monitoring make up between two members comprising:
aligning a first member having a thread with a second member having a mating thread;
clamping the first member;
gripping the second member;
rotating the second member relative to the first member;
coupling the thread with the mating thread through a threading portion (115) to a shouldering point (119) to form a threaded connection;
capturing an acoustic signature (130) during at least one of the threading portion (115) and the shouldering point (119);
determining whether the acoustic signature (130) represents a first type indicating a properly made up connection of the second member and the first member or whether the acoustic signature (130) represents a second type indicating an improperly made up connection of the second member and the first member; and
providing an output signal indicating whether the acoustic signature (110) is one of the first type and the second type.

14. The method of claim 13, wherein determining whether the acoustic signature (130) represents the second type includes identifying characteristics of the threading portion of the acoustic signature (130).

15. The method of claim 13 or 14, wherein determining whether the acoustic signature (130) represents one of the first type indicating and the second type includes referencing data from at least one of a rotary encoder (93), a load transducer (95) and a temperature transducer (97).
